# EUROPÄISCHE PATENTSCHRIFT

(11) **EP 0 763 664 B1**
(45) Veröffentlichungstag und Bekanntmachung des Hinweises auf die Patenterteilung: **02.12.1998**
(21) Anmeldenummer: 96110798.4
(22) Anmeldetag: 04.07.1996
(51) Int. Cl.: F16B 13/04, F16B 13/06

(54) **Spreizdübel**
Expansion dowel
Cheville d'expansion

(30) Priorität: 15.09.1995 DE 19534365
(43) Veröffentlichungstag der Anmeldung: 19.03.1997
(73) Patentinhaber: fischerwerke Artur Fischer GmbH & Co. KG, D-72178 Waldachtal (DE)
(72) Erfinder: Schäffer, Marc, 72160 Horb-Mühlen (DE)

(56) Entgegenhaltungen:
- WO-A-84/01005
- WO-A-92/04547
- CH-A- 338 589
- DE-A- 3 023 411
- DE-A- 3 507 022
- FR-A- 2 002 794
- GB-A- 1 487 030

## Beschreibung

Die Erfindung betrifft einen Spreizdübel zur Verankerung in einem Bauteil, bestehend aus einer Spreizhülse und einem Gewindebolzen, gemäß der Gattung des Anspruches 1.

Aus der DE 35 07 022 A1 ist ein Spreizdübel mit einer Spreizhülse bekannt, die mehrere über einen Teil Ihrer Länge sich erstreckende Schlitze aufweist. Zur Verankerung des Spreizdübels wird in die Spreizhülse ein mit einem Spreizkonus versehener Gewindebolzen mittels einer Mutter eingezogen, die sich über eine Unterlagscheibe an der hinteren Stirnseite der Spreizhülse abstützt. Ein solcher Spreizdübel eignet sich zur Durchsteckmontage, bei der der Spreizdübel durch den zu befestigenden Gegenstand hindurch in das im Bauteil vorgebohrte Bohrloch bis zur Anlage der Mutter an der Außenfläche des zu befestigenden Gegenstandes eingeschoben wird. Da sich die Mutter sowohl am zu befestigenden Gegenstand als auch an der hinteren Stirnseite der Spreizhülse abstützt, kann zwar eine ausreichende Verankerung des Spreizdübels erreicht werden, jedoch nur eine unzureichende Verspannung des zu befestigenden Gegenstandes. Durch das Festsetzen der Spreizhülse beim Verankerungsvorgang tritt lediglich eine axiale Verschiebung des Gewindebolzens, jedoch keine axiale Verschiebung der Mutter in Richtung Bauteil ein. Damit können auf das zu befestigende Bauteil keine Spannkräfte aufgebracht werden. Dies ist vor allem dann ungünstig, wenn zum Beispiel durch Unebenheit der Bauteiloberfläche bzw. des zu befestigenden Gegenstandes eine Hohllage im Bereich des Befestigungspunktes besteht.

Um diesen Nachteil zu vermeiden, ist bei dem bekannten Spreizdübel eine Stauchzone in der Spreizhülse vorgesehen, die sich unmittelbar an die Längsschlitze anschließt. Die Stauchzone ist durch mehrere, in Umfangsrichtung im Abstand zueinander angeordnete, schräg stehende Aussparungen gebildet. Eine ähnliche Stauchzone ist beispielsweise auch aus der WO 84/01005 bekannt.

Mit einer solchen Stauchzone ist zwar eine Verspannung des zu befestigenden Gegenstandes am Bauteil möglich, allerdings treten eine Reihe anderer Nachteile auf, die die Funktionsfähigkeit der bekannten Spreizdübel erheblich beeinträchtigt. Durch die schrägstehenden Aussparungen wird bei einer Stauchung der Spreizhülse der hintere Teil der Spreizhülse gegenüber ihrem vorderen Teil radial gegeneinander verschoben und im Bohrloch bzw. auf dem Gewindebolzen verklemmt. Da durch das Bohrloch und den Bolzen die radiale Verschiebung begrenzt ist, beulen zusätzlich die zwischen den Aussparungen verbleibenden Stege unkontrolliert sowohl nach innen als auch nach außen aus. Dadurch ergibt sich eine weitere Verklemmung des Gewindebolzens mit der Spreizhülse, die zwangsläufig den Einziehwiderstand für den Gewindebolzen zur Aufspreizung des Dübels erhöht. Durch die ungleichmäßige Ausbeulung und radiale Verschiebung zwischen dem oberen und unteren Teil der Spreizhülse wird auch der Spreizkonus ungleichmäßig in die durch die Schlitze gebildeten Spreizschenkel der Spreizhülse eingezogen. Durch unterschiedliche Belastung der Spreizschenkel werden diese ungleichmäßig aufgespreizt und zum Teil durch Überlastung derart verformt, daß eine ordnungsgemäße Verankerung nicht möglich ist. Für sicherheitsrelevante Befestigungen sind die bekannten Spreizdübel daher nicht geeignet.

Aus der GB-A1 487 030 ist ein Spreizdübel mit einer Spreizhülse bekannt, deren Spreizzone durch axial voneinander beabstandete, in Umfangsrichtung verlaufende ovale Aussparungen gebildet ist. Dieser Spreizdübel hat den Nachteil, daß sich die Aussparungen aufgrund ihrer bis zu den Enden gleichbleibenden Breite nur unvollständig schließen lassen, so daß ein nur kurzer Stauchweg zur Verfügung steht. Weiterer Nachteil ist eine ungünstige Torsionsmomentübertragung von einem hinteren Teil auf einen vorderen Teil der Spreizhülse, die zu einem Aus- oder Einbeulen von zwischen den Aussparungen bestehen bleibenden Stegen und zu radialem Versatz des hinteren Teils der Spreizhülse gegenüber dem vorderen Teil führen kann.

Aus der DE-A 30 23 411 ist ein Spreizdübel bekannt, dessen Spreizhülse sich mit Stützlaschen axial gegen ein Wiederlager abstützt. Aufgrund ihrer schwachen Dimensionierung übertragen die Stützlaschen nur eine kleine Kraft in axialer Richtung, die nicht sicherstellt, daß die Stauchung der Spreizhülse erst nach deren Verankerung in einem Bohrloch erfolgt. Die Übertragung eines Torsionsmomentes von einem hinteren Teil auf einen vorderen Teil der Spreizhülse ist nicht vorgesehen.

Aus der CH 338 589 ist ein Spreizdübel mit einer Spreizhülse bekannt, die in Umfangsrichtung verlaufende, rechteckige Aussparungen zur Bildung einer Stauchzone aufweist. Diese Aussparungen haben aufgrund ihrer bis zu den Enden gleichbleibenden Breite den Nachteil, daß sie sich nur teilweise schließen lassen, wodurch der Stauchweg der Spreizhülse begrenzt ist. Weiterer Nachteil ist die ungünstige Übertragung eines Torsionsmomentes vom hinteren Teil der Spreizhülse auf den vorderen Teil, die ein Aus- oder Einbeulen der Spreizhülse im Bereich der Spreizzone begünstigt.

Der Erfindung liegt die Aufgabe zugrunde, einen Spreizdübel mit einer Stauchzone zu schaffen, der einfach herstellbar ist und eine funktionssichere Verankerung ermöglicht.

Die Lösung dieser Aufgabe wird durch die im Anspruch 1 angegebenen Merkmale erreicht.

Durch die zueinanderweisenden und sich in Umfangsrichtung mäanderförmig überlappenden Enden der sichelförmigen Aussparungen entsteht eine Stauchzone, die eine axiale Verkürzung der Spreizhülse ohne radialen Versatz oder Ausbeulen ermöglicht. Beim Stauchvorgang werden die sichelförmigen Aussparungen zusammengedrückt, wobei die durch die überlappenden Enden der Aussparungen gebildeten Biegestege ausschließlich in Achsrichtung und damit ohne radiales Ausbeulen verformen. Die mit ihren Enden zueinanderweisenden und in Umfangsrichtung sich überlappenden Aussparungen lassen eine axiale Verkürzung der Spreizhülse ohne Ausbeulung um die doppelte Breite der Aussparungen im Bereich ihres Scheitelpunktes zu. Da die Spreizhülse gleichmäßig verkürzt wird, werden auch die Spreizschenkel der Spreizhülse gleichmäßig radial aufgespreizt. Aufgrund der Verkürzung der Spreizhülse ist die Verspannung des zu befestigenden Gegenstandes auch bei extremen Hohllagen möglich.

Besonders vorteilhaft ist es, wenn die Anzahl der die Stauchzone bildenden Aussparungen das doppelte der Anzahl der Längsschlitze der Spreizhülse beträgt und der Scheitelpunkt der dem vorderen Ende der Spreizhülse am nächsten liegenden sichelförmigen Aussparungen jeweils mit einem Längsschlitz fluchten. Damit wird eine exakt mit den Spreizschenkeln fluchtende, pilzförmige Anbindung der Spreizschenkel an die Spreizhülse erreicht, so daß die Verkürzung gleichmäßig auf alle Spreizschenkel einwirkt.

Die Längsschlitze können sich sowohl bis zu den dem vorderen Ende der Spreizhülse am nächsten liegenden Aussparungen erstrecken als auch in einem Abstand zu diesen Aussparungen enden, wobei in diesem Fall das Schlitzende vorzugsweise als Erweiterung ausgeführt ist, um ein leichtes Aufklappen der Spreizschenkel zu erreichen.

Ein besonders günstiges Stauchverhalten wird dann erreicht, wenn die Breite des Biegesteges zwischen den überlappten Enden der Aussparungen etwa der lichten Weite und die Breite des zwischen den Enden der umlaufend angeordneten Aussparungen verbleibenden Steges etwa der doppelten lichten Weite der sichelförmigen Aussparung im Bereich ihres Scheitelpunktes beträgt.

In der Zeichnung sind Ausführungsbeispiele der Erfindung dargestellt.

Es zeigen:
- Figur 1: den erfindungsgemäßen Spreizdübel mit bis zur Stauchzone sich erstrekkenden Längsschlitzen,
- Figur 2: den Spreizdübel mit in einem Abstand zur Stauchzone sich erstreckenden Längsschlitzen und
- Figur 3: den in einem Bauteil verankerten Spreizdübel gemäß Figur 2.

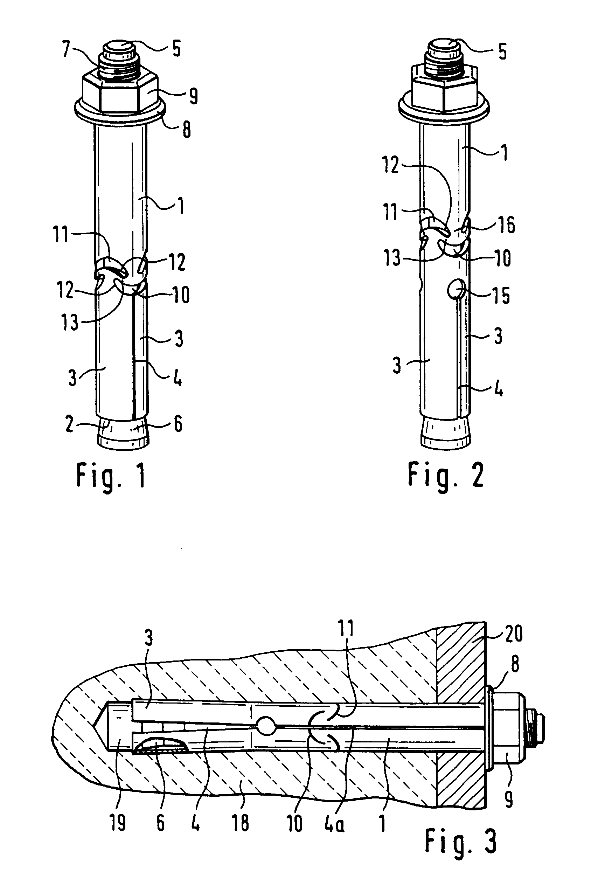

Der Spreizdübel nach Figur 1 besteht aus einer Spreizhülse 1, die von ihrem vorderen, einführseitigen Ende 2 ausgehend mehrere Spreizschenkel 3 bildende Längsschlitze 4 aufweist. Wird die Spreizhülse durch Ausstanzen einer Blechplatine und anschließendes Rollen hergestellt, wird einer der Längsschlitze durch den Rollspalt 4a gebildet (siehe Figur 3). Durch die Spreizhülse 1 ist ein Gewindebolzen 5 gesteckt, an dessen vorderem Ende ein Spreizkonus 6 einstückig angeformt ist. Am hinteren Ende des Gewindebolzens befindet sich ein Gewindeabschnitt 7, auf den eine eine angestauchte Unterlagscheibe 8 aufweisende Mutter 9 aufgeschraubt ist.

Als Stauchzone weist die Spreizhülse 1 mehrere sichelförmige Aussparungen 10, 11 auf, die in Umfangs- und Achsrichtung jeweils im Abstand zueinander angeordnet sind. Die Enden 12 der Aussparungen 10, 11 weisen in Achsrichtung zueinander und überlappen sich in Umfangsrichtung mäanderförmig, so daß zwischen den Enden Biegestege 13 entstehen. Im dargestellten Ausführungsbeispiel weist der Spreizdübel drei Längsschlitze 4 und sechs die Stauchzone bildende Aussparungen 10, 11 auf. Dabei fluchtet jeweils der Scheitelpunkt der Aussparungen 10 mit den Längsschlitzen 4. Da die versetzt darüberliegenden Aussparungen 11 damit zwangsläufig mit den Spreizschenkeln 3 fluchten, ergibt sich eine pilzartige, symmetrische Anbindung der Spreizschenkel 3 an die Spreizhülse 1. Bei dem Ausführungsbeispiel nach Figur 1 mündet der Längsschlitz 4 in der dem vorderen Ende 2 der Spreizhülse 1 am nächsten liegenden Aussparung 10.

In Figur 2 ist ein Ausführungsbeispiel dargestellt, bei dem die Längsschlitze 4 in einem Abstand zu den die Stauchzone bildenden Aussparungen 10, 11 enden. Um ein leichtes Aufklappen der Spreizschenkel 3 zu erreichen, enden die Längsschlitze 4 in einer Erweiterung 15. Eine ausreichende Steifigkeit der Spreizhülse 1 bei guter Stauchfähigkeit wird dadurch erreicht, daß die Breite des Biegesteges 13 zwischen den überlappten Enden 12 der Aussparungen 10, 11 etwa der lichten Weite der Aussparungen 10, 11 und die Breite des zwischen den Enden 12 der umlaufend angeordneten Aussparungen verbleibenden Steges 16 etwa der doppelten lichten Weite der Aussparungen 10, 11 im Bereich ihres Scheitelpunktes beträgt.

In Figur 3 ist der in einem Bauteil 18 verankerte Spreizdübel dargestellt. Zur Verankerung des Spreizdübels wird dieser in das Bohrloch 19 des Bauteiles 18 soweit eingeschoben, bis die Mutter 9 mit ihrer angestauchten Unterlagscheibe 8 an der Außenfläche des zu befestigenden Gegenstandes 20 anliegt. Durch Einziehen des Spreizkonusses 6 in den geschlitzten Bereich der Spreizhülse 1 werden einerseits die Spreizschenkel 3 radial nach außen gedrückt und damit aufgespreizt und gleichzeitig beim Vorliegen einer Hohllage zwischen dem Bauteil 18 und dem Befestigungsgegenstand 20 die Spreizhülse 1 im Bereich der durch die Aussparungen 10, 11 gebildeten Stauchzone zusammengedrückt. Die maximale Stauchung ist erreicht, wenn die beiden die Aussparung bildenden Begrenzungskanten aufeinanderliegen.

## Patentansprüche

1. Spreizdübel zur Verankerung in einem Bauteil (18), bestehend aus einer Spreizhülse (1), die von ihrem vorderen, einführseitigen Ende ausgehend mehrere über einen Teil ihrer Länge sich erstreckende und Spreizschenkel (3) bildende Schlitze (4) sowie eine sich an die Schlitze (4) anschließende, durch Aussparungen (10, 11) gebildete Stauchzone aufweist, und einem die Hülse (1) durchdringenden Gewindebolzen (5), an dessen vorderen Ende ein Spreizkonus (6) zum Einziehen in den geschlitzten Teil der Spreizhülse (1) angeordnet ist, **dadurch gekennzeichnet,** daß die Stauchzone durch mehrere in Umfangs- und Achsrichtung jeweils im Abstand zueinander angeordnete, sichelförmige Aussparungen (10, 11) gebildet ist, wobei die Enden (12) der Aussparungen (10, 11) in Achsrichtung zueinanderweisen und sich in Umfangsrichtung zur Bildung von Biegestegen (13) mäanderförmig überlappen.

2. Spreizdübel nach Anspruch 1, **dadurch gekennzeichnet,** daß die Anzahl der die Stauchzone bildenden Aussparungen (10, 11) das doppelte der Anzahl der Längsschlitze (4) der Spreizhülse (1) beträgt, und daß der Scheitelpunkt der dem vorderen Ende (2) der Spreizhülse (1) am nächsten liegenden Aussparungen (10) jeweils mit den Längsschlitzen (4) fluchtet.

3. Spreizdübel nach Anspruch 1, **dadurch gekennzeichnet,** daß die Längsschlitze (4) sich bis zu den dem vorderen Ende (2) der Spreizhülse (1) am nächsten liegenden Aussparungen (10) erstrecken.

4. Spreizdübel nach Anspruch 1, **dadurch gekennzeichnet**, daß die Längsschlitze (4) in einem Abstand zu den dem vorderen Ende (2) der Spreizhülse (1) am nächsten liegenden Aussparungen (10) enden.

5. Spreizdübel nach Anspruch 1, **dadurch gekennzeichnet**, daß die Breite des Biegesteges (13) zwischen den überlappten Enden (12) der in Achsrichtung angeordneten Aussparungen (10, 11) etwa der lichten Weite der Aussparungen und die Breite des zwischen den Enden (12) der umlaufend angeordneten Aussparungen (10, 11) verbleibenden Steges (16) etwa der doppelten lichten Weite der Aussparungen (10, 11) im Bereich ihres Scheitelpunktes beträgt.

## Claims

1. Expansible plug for anchoring in a building component (18), consisting of an expansible sleeve (1) that has a plurality of slots (4) that start from its front, insertion-side end and extend along a portion of its length forming expansible legs (3) and also a compressible zone, formed by cut-outs (10, 11), that adjoins the slots (4), and of a threaded bolt (5) that passes through the sleeve (1), on the front end of which bolt there is arranged an expansion cone (6) to be drawn into the slotted portion of the expansible sleeve (1), characterized in that the compressible zone is formed by a plurality of sickle-shaped cut-outs (10, 11) that are arranged spaced one from another circumferentially and axially, the ends (12) of the cut-outs (10, 11) pointing towards one another axially and overlapping one another circumferentially in meandering formation to form bending webs (13).

2. Expansible plug according to claim 1, characterized in that the number of the cut-outs (10, 11) that form the compressible zone is twice the number of the longitudinal slots (4) in the expansible sleeve (1) and the apex of each of the cut-outs (10) that lie closest to the front end (2) of the expansible sleeve (1) is aligned with a respective one of the longitudinal slots (4).

3. Expansible plug according to claim 1, characterized in that the longitudinal slots (4) extend to the cut-outs (10) that lie closest to the front end (2) of the expansible sleeve (1).

4. Expansible plug according to claim 1, characterized in that the longitudinal slots (4) end at locations spaced from the cut-outs (10) that lie closest to the front end (2) of the expansible plug (1).

5. Expansible plug according to claim 1, characterized in that the width of the bending web (13) between the overlapped ends (12) of the axially arranged cut-outs (10, 11) is approximately the inside width of the cut-outs in the region of their apex and the width of the web (16) remaining between the ends (12) of the circumferentially arranged cut-outs (10, 11) is approximately twice the inside width of the cut-outs (10, 11) in the region of their apex.

## Revendications

1. Cheville d'expansion destinée à l'ancrage dans une pièce structurelle (18) et comprenant une douille déployable (1) qui est munie de plusieurs fentes (4) partant de son extrémité antérieure située côté introduction, s'étendant sur une partie de sa longueur et formant des branches écartables (3), ainsi que d'une zone de refoulement située dans la continuité directe desdites fentes (4), et formée par des échancrures (10, 11) ; et une tige filetée (5) traversant la douille (1), et à l'extrémité antérieure de laquelle se trouve un cône d'écartement (6) conçu pour s'enfoncer dans la partie fendue de ladite douille déployable (1), caractérisée par le fait que la zone de refoulement est formée par plusieurs échancrures (10, 11) en forme de croissants, respectivement pratiquées à distance les unes des autres dans les directions périphérique et axiale, les extrémités (12) desdites échancrures (10, 11) étant tournées les unes vers les autres dans la direction axiale et se chevauchant dans la direction périphérique, en décrivant des méandres, afin de former des membrures de flexion (13).

2. Cheville d'expansion selon la revendication 1, caractérisée par le fait que le nombre des échancrures (10, 11), formant la zone de refoulement, représente le double du nombre des fentes longitudinales (4) de la douille déployable (1) ; et par le fait que le point sommital des échancrures (10), les plus proches de l'extrémité antérieure (2) de la douille déployable (1), coïncide à chaque fois avec lesdites fentes longitudinales (4).

3. Cheville d'expansion selon la revendication 1, caractérisée par le fait que les fentes longitudinales (4) s'étendent jusqu'aux échancrures (10) les plus proches de l'extrémité antérieure (2) de la douille déployable (1).

4. Cheville d'expansion selon la revendication 1, caractérisée par le fait que les fentes longitudinales (4) s'achèvent à distance des échancrures (10) les plus proches de l'extrémité antérieure (2) de la douille déployable (1).

5. Cheville d'expansion selon la revendication 1, caractérisée par le fait que la largeur de la membrure de flexion (13), située entre les extrémités chevauchées (12) des échancrures (10, 11) ménagées axialement, représente sensiblement la largeur intérieure desdites échancrures ; et la largeur de la membrure (16), subsistant entre les extrémités (12) des échancrures (10, 11) ménagées périphériquement, représente environ le double de la largeur intérieure desdites échancrures (10, 11) dans la région de leur point sommital.
